# EUROPEAN PATENT SPECIFICATION

(11) **EP 1 718 794 B1**
(45) Date of publication and mention of the grant of the patent: **21.09.2016**
(21) Application number: 05789782.9
(22) Date of filing: 24.02.2005
(51) Int. Cl.: H02K 5/00, H02K 7/14, H02K 3/52, H02K 1/18, H02K 1/14, D06F 37/30

(54) **STATOR OF OUTER ROTOR-TYPE MOTOR FOR DRUM-TYPE WASHING MACHINE**
STATOR FÜR ROTORAUSSENMOTOR EINER TROMMELWASCHMASCHINE
STATOR D'UN MOTEUR DU TYPE A ROTOR EXTERNE POUR MACHINE A LAVER DU TYPE A TAMBOUR

(30) Priority: 26.02.2004 KR 2004012999; 27.02.2004 KR 2004013267
(43) Date of publication of application: 08.11.2006
(60) Divisional application: 15188483.0
(73) Proprietor: LG Electronics Inc., Seoul 150-721 (KR)
(72) Inventor: LEE, Woon Yong, Gwangju-si 506-802 (KR)
(74) Representative: Vossius & Partner Patentanwälte Rechtsanwälte mbB
(86) International application number: PCT/KR2005/000489
(87) International publication number: WO 2006/004246

(56) References cited:
- GB-A- 2 325 787
- JP-A- 2000 254 392
- KR-A- 2000 012 926
- KR-A- 2002 083 761

## Description

### Technical Field

The present invention relates to drum type washing machines, and more particularly, to a stator structure of an outer rotor type BLDC motor applicable to a direct coupling, drum type washing machine.

### Background Art

In general, a drum type washing machine, washing laundry by using a friction force between a drum rotated by a driving power of a motor and laundry in a state detergent, washing water, and the laundry are introduced into the drum, shows almost no damage to, and entangling of the laundry, and has pounding, and rubbing washing effects.

In the related art drum type washing machines, there are an indirect coupling type in which the driving power is transmitted from the motor to the drum through a belt wound on a motor pulley and a drum pulley indirectly, and a direct coupling type in which a rotor of a BLDC motor is coupled to the drum directly, to transmit the driving power from the motor to the drum, directly.

The type in which the driving power of the motor is transmitted to the drum, not directly, but indirectly through the motor pulley and the drum pulley, has much energy loss in the course of power transmission, and causes much noise in the course of power transmission.

According to this, for solving the problems of the indirect coupling, drum type washing machines, it is the present trend that use of the direct coupling, drum type washing machines with the BLDC motor is increasing.

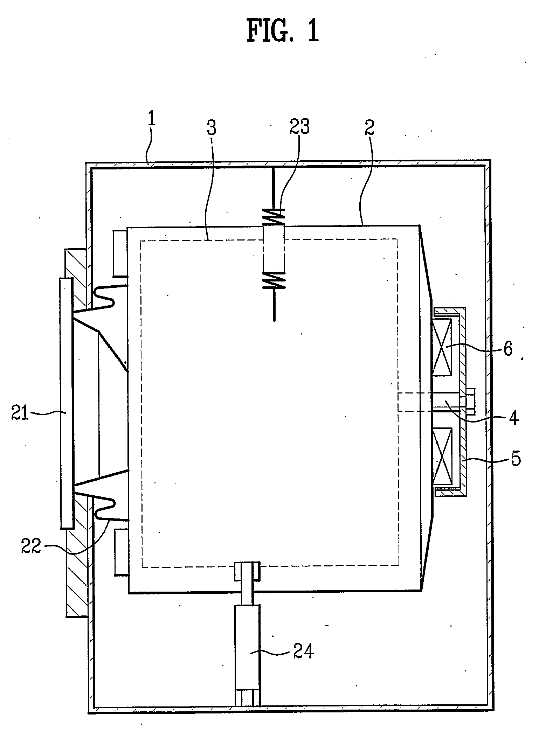

A related art direct coupling, drum type washing machine will be described with reference to FIG. 1, briefly. FIG. 1 illustrates a longitudinal section of a related art drum type washing machine.

Referring to FIG. 1, the related art drum type washing machine is provided with a tub 2 mounted on an inside of a cabinet 1, and a drum 3 rotatably mounted on a central portion of an inside of the tub 2. There is a motor in rear of the tub 2, wherein a stator 6 is secured to a rear wall of the tub, and a rotor 5 surrounds the stator 6, and is connected to the drum 3 with a shaft passed through the tub.

In the meantime, there are a door 21 mounted on a front of the cabinet 1, and a gasket 22 between the door 21 and the tub 2.

There are hanging springs 23 between an inside surface of an upper portion of the cabinet 1, and an upper portion of an outside circumferential surface of the tub 2, and a friction damper 24 between the inside surface of a lower portion of the cabinet 1, and a lower portion of the outside circumferential surface of the tub 2.

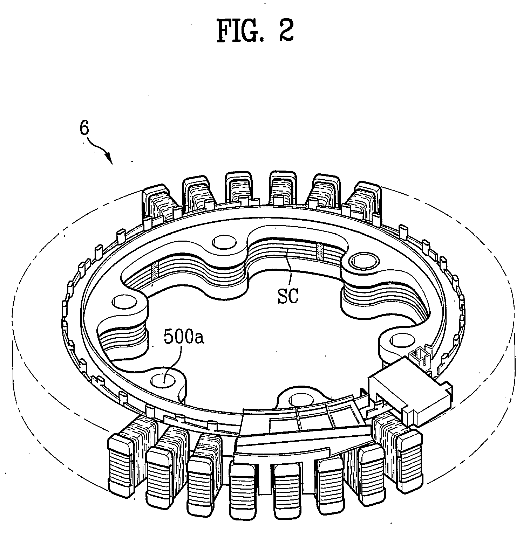

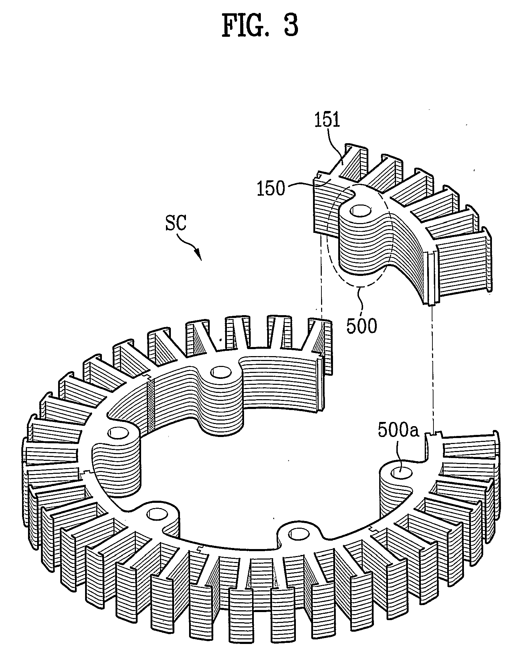

FIG. 2 illustrates a perspective exterior view of the stator in FIG. 1, and FIG. 3 illustrates a perspective view of a sectional core DC applied to the stator in FIG. 2.

In a related art method for fabricating the core, a sheet of metal plate is pressed to form a unit core having Ts 151, a base 150, and projections 500 opposite to the Ts 151 each for forming fastening hole 500a therein, the unit cores are stacked to form a unit core assembly, and the unit core assemblies are joined to each other in a circumferential direction, to complete fabrication of the stator core, called the sectional core SC.

The projection 500 provides the fastening hole 620a for fastening the stator 6 to the rear wall of the tub, and serves to sustain a fastening force of a bolt.

However, the method for fabricating the stator 6 with the sectional core SC has, not only a complicate fabrication process, but also loss of much material.

Therefore, even if so called a helical type core HC is favorable, in which a sheet of steel plate having the Ts 151 and the base 150 is stacked turning in a helix, for reducing the material loss, and making the fabrication process simple, since it is required to bend the sheet of metal punched out in a shape of a belt into the helix, the helical core has a drawback in that the projection for fastening the stator to the tub can not be formed on an inner side of the core.

This is because, if the projection 500 is formed on the inner side of the core in fabrication of the helical core HC, a large width of the core at a portion having the projection formed thereon impedes bending of the core.

Therefore, currently, for employing the helical core HC, a stator structure is required, in which a function the same with the projection of the sectional core SC is made to be carried out, not by the core itself, but by other portion.

For reference, a reason why it is important to secure an adequate rigidity of the projection having the fastening hole for fastening the stator to the tub is as follows.

The washing machine in which the drum is directly rotated by the BLDC motor has the stator mounted on a rear portion of the tub, directly. In a case of the motor for a large capacity drum type washing machine with more than 1.5kg of stator net weight, and a spinning speed in a range of 600 ∼ 2000 RPM, it is liable that a fastened portion of the stator 6 is broken due to the stator weight, and vibration, shaking, and deformation of the rotor 5 in the high speed rotation.

Particularly, in a case of the drum type washing machine, in which the BLDC motor is used, and the stator 6 is secured to the tub rear wall, where an axis direction of the stator 6 is substantially parallel to ground, the vibration generated during operation of the washing machine causes intensive damage to the fastening portion of the stator 6 to the tub rear wall.

Thus, an adequate rigidity of the projection having the fastening hole formed therein is very important in fastening the stator 6 to the tub.

KR-A-20000012926 discloses a stator according to the preamble of claim 1 or claim 16.

### Disclosure of Invention

An object of the present invention is to provide an outer rotor type motor for a drum type washing machine, which has a stator that can reduce material and weight required for fabrication, has a simple fabrication process, and can be mounted on a fixing side, such as a tub or a bearing housing, securely.

Another object of the present invention is to provide a new stator structure which can be mounted on a fixing side, such as a tub or a bearing housing securely while reducing material for fabrication as described before so as to be suitable for a BLDC motor of a drum type washing machine, which has a weight over 1.5kg only of the stator, and a rotation speed varying 0 ∼ 2,000RPM or over.

Another object of the present invention is to provide a stator structure, which can prevent an assembly interference caused by steps in assembly of upper, and lower insulators of a stator core, and improve mountability of a cylindrical sleeve on an inside circumferential surface of a fastening hole of each of the upper, and lower insulators.

The object of the present invention can be achieved by providing a stator of an outer rotor type motor for a drum type washing machine including an annular core of a multi-layered structure formed by stacking a steel plate having a belt shaped base and Ts projected from the base while winding the steel plate in a helix starting from a bottom layer to a top layer, an upper insulator of an electric insulating material covered on an upper side of the helical core in a shape complementary to a shape of the helical core, and a lower insulator of an electric insulating material covered on a lower side of the helical core at the time of assembly with the upper insulator in a shape complementary to a shape of the helical core, wherein each of the upper insulator and the lower insulator includes fastening portions formed as one body therewith projected from an inner side of the helical core toward a center of the stator for fastening the stator to a fixing side of the tub, the fastening portion has a boss which construct a fastening hole for fastening the stator to a fixing side of the tub with a fastening member, and each of the bosses of the upper, and lower insulators includes a raised portion projected from a side facing the other insulator toward an opposite insulator, for putting the upper, and lower insulators into close contact in assembly to improve a state of assembly of the upper, and lower insulators.

In another aspect of the present invention, a stator structure of an outer rotor type motor for a drum type washing machine includes an annular core of a multi-layered structure formed by stacking a steel plate having a belt shaped base and Ts projected from the base while winding the steel plate in a helix starting from a bottom layer to a top layer, an upper insulator of an electric insulating material covered on an upper side of the helical core in a shape complementary to a shape of the helical core, and a lower insulator of an electric insulating material covered on a lower side of the helical core at the time of assembly with the upper insulator in a shape complementary to a shape of the helical core, wherein each of the upper insulator and the lower insulator includes at least three fastening portions formed as one body therewith projected from an inner side of the helical core toward a center of the stator for fastening the stator to a fixing side of the tub, the fastening portion having a boss which constructs a fastening hole for fastening the stator to a fixing side of the tub with a fastening member, and fastening projections on an inside circumferential surface of the fastening hole, for preventing the cylindrical sleeve from falling off the fastening hole.

According to this, the present invention enables secure mounting of the stator on a fixing side, such as a tub, while reducing materials and weight required for fabrication of the stator of a BLDC motor of a drum type washing machine, and simplifying a fabrication process.

Particularly, alike the case a sectional core is employed, the present invention enables secure mounting of the stator on a fixing side, such as a tub or a bearing housing, while reducing materials of the stator core and the insulators so as to be suitable for a BLDC motor of a drum type washing machine, having a weight over 1.5kg only of the stator, and a rotation speed varying 0 ∼ 2,000RPM or over.

The drum type washing machine of the present invention enables easy mounting of the stator on the tub in an assembly line, to enable easier repair work at the time of service.

Moreover, the improved assembly state of the upper and lower insulators enhances rigidity of the stator, with reduction of noise and vibration, which improves mechanical reliability and extends a lifetime.

Along with this, the improved mountability of the cylindrical sleeve, which is placed in the fastening holes of the upper, and lower insulators, and serves as a bushing, enhances rigidity of the stator, with reduction of noise and vibration, which improves mechanical reliability of the product, and extends a lifetime of the product, thereby having significant industrial applicability.

### Brief Description of Drawings

FIG. 1 illustrates a longitudinal section of a related art direct coupling type drum type washing machine, schematically;
FIG. 2 illustrates a perspective view of a related art stator;
FIG. 3 illustrates a perspective view of the sectional core in FIG. 2;
FIG. 4 illustrates an exterior perspective view of a stator in accordance with a preferred embodiment of the present invention;
FIG. 5 illustrates an exploded perspective view of FIG. 4;
FIG. 6 illustrates a back side perspective view a portion of the upper insulator in FIG. 5;
FIG. 7 illustrates a plan view of key parts of the stator in FIG. 4;
FIGS. 8 and 9 are reference drawings, illustrating a versatility of application of the insulators; and
FIG. 10 illustrates a plan view of a variation of the fastening portion in FIG. 5.

### Best Mode for Carrying Out the Invention

Embodiments of the present invention will be described with reference to the attached drawings 4 to 10.

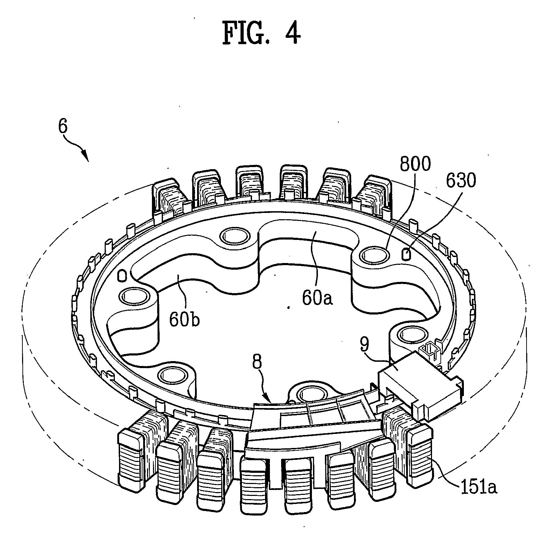

A preferred embodiment of the present invention will be described with reference to FIGS. 4 ∼ 6.

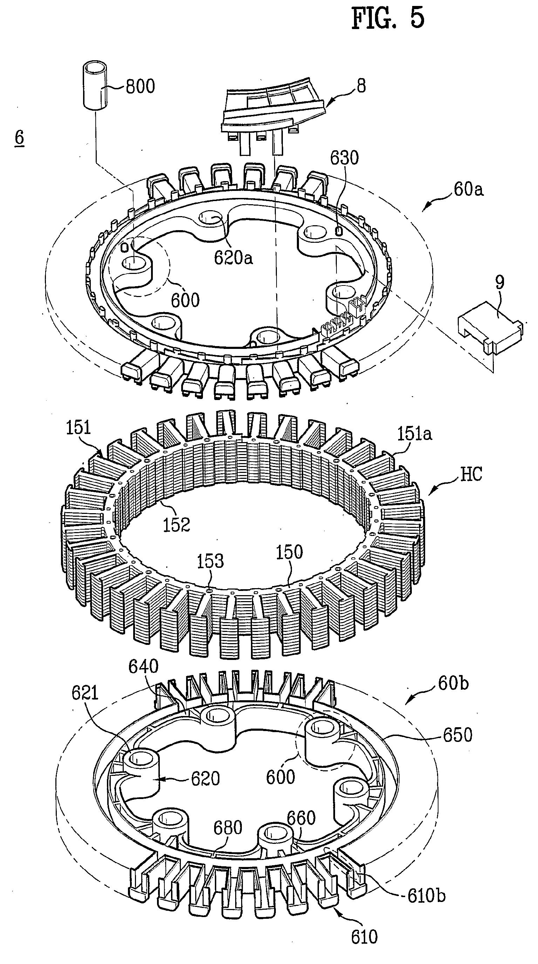

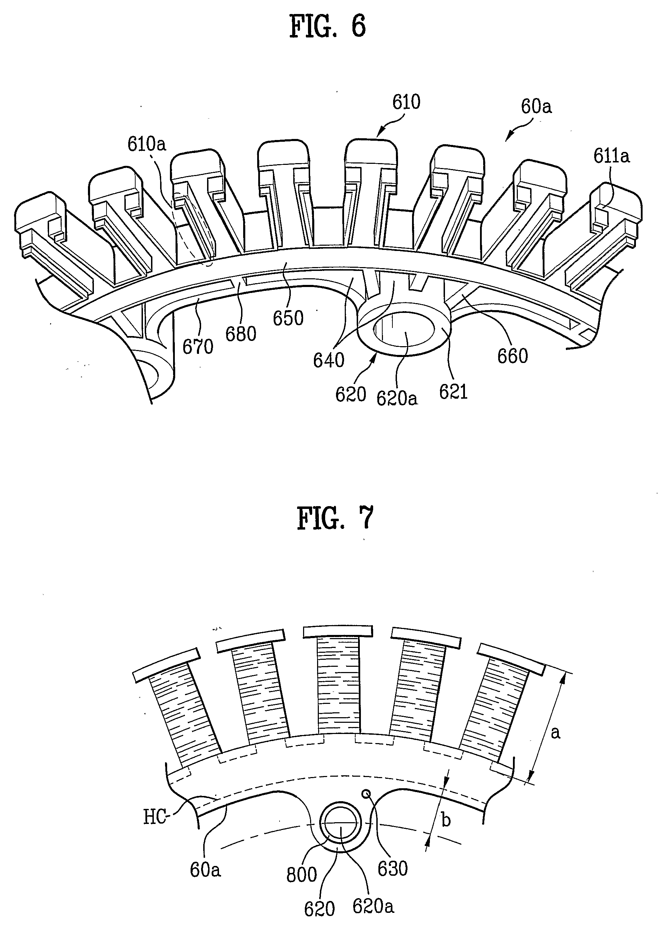

FIG 4 illustrates an exterior perspective view of a stator in accordance with a preferred embodiment of the present invention, FIG. 5 illustrates an exploded perspective view of FIG. 4, and FIG. 6 illustrates a back side perspective view of a portion of the upper insulator in FIG. 5.

As shown, the stator 6 of an outer rotor type motor includes an annular helical core HC having a multi-layered structure formed by stacking a steel plate with a belt shapes base 150 and "T"-shaped members 151 projecting from the base 150 while winding the steel plate in a helix starting from a bottom layer to a top layer, an upper insulator 60a of an electric insulating material covered on an upper side of the helical core HC in a shape complementary to a shape of the helical core HC, and a lower insulator 60b of an electric insulating material covered on the lower side of the helical core HC at the time of assembly with the upper insulator 60a in a shape complementary to a shape of the helical core HC, wherein each of the upper insulator 60a and the lower insulator 60b includes three or more than three fastening portions 600 formed as one body therewith projected from an inner side of the helical core HC toward a center of the stator 6 for fastening the stator 6 to a fixing side of the tub.

The fastening portion 600 (see FIG. 5) has a fastening hole 620a (see FIG. 5) for securing the stator 6 to a fixing side, such as the tub, with a fastening member. The fastening hole 620a is constructed of a boss 620 projected to a back side of the fastening portion 600.

Each of the bosses 620 of the upper, and lower insulators 60a, and 60b includes a raised portion 621 projected from a side facing the other insulator toward an opposite insulator, for putting the upper, and lower insulators 60a and 60b into close contact in assembly to improve a state of assembly of the upper, and lower insulators 60a, and 60b.

Each of the upper insulator 60a and the lower insulator 60b has a supporting rib 650 on an inner side of a radial direction of a surface of each of the upper insulator 60a and the lower insulator 60b in contact with an upper or lower surface of the helical core HC along a circumferential direction thereof for supporting an inside surface of the core.

The fastening portion 600 of each of the upper insulator 60a and the lower insulator 60b has at least one reinforcing rib 660 connected between the boss 620 of the fastening hole 620a and the supporting rib 650 for spreading fastening force concentrate on the boss 620 and reinforcing a strength of the fastening portion 600.

Moreover, the fastening portion 600 of each of the upper insulator 60a and the lower insulator 60b has a reinforcing rib 670 on an inner side thereof connected between the fastening portions, and at least one connection rib 680 connected between the reinforcing rib 670 and the supporting rib 650 which supports an inside surface of the core in a radial direction, for providing a supporting force.

In the meantime, each of the upper insulator 60a and the lower insulator 60b has tips 610a and 610b on opposite sidewalls of each of the "T"-shaped members ("Ts") 610 thereof having shapes in complementary to each other for fitting in at the time of assembly to form a flush surface.

Each of the tips 610a and 610b on each of the "T"-shaped members 610 has a " 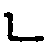 " shape if the other side has a " 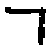 " shape.

At the opposite end surfaces substantially perpendicular to the opposite sidewall surfaces of the "T"-shaped member 610 of the upper insulator 60a and the lower insulator 60b, there are also the tips 610a and 610b having shape in complementary to each other.

The "T"-shaped member 610 of each of the upper insulator 60a and the lower insulator 60b has a seating surface 611 a at an end for seating a core shoe 151a of the helical core HC.

Along with this, in the vicinity of the fastening hole 620a of the fastening portion 600 of the upper insulator 60a, there is a positioning projection 630 having a shape in complementary to a positioning hole or a slot (not shown) in the fixing side of the tub.

There is a cylindrical sleeve 800 in the fastening hole 620a, a spring pin having an elasticity owing to an incised portion, or a hollow pin enabling press fit in the fastening hole 620a, serves as a bushing.

The base 150 of the helical core HC has notches for reducing stress to make the winding of core easy, and the helical core HC is held together with a rivet 153 riveted through a pass through hole in the base 150.

A winding starting portion and a winding end portion of the helical core HC may be welded to predetermined portions of the base 150 in contact therewith, respectively.

Referring to FIG. 7, with regard to the stator 6 of the present invention having the fastening portions 600 each formed as one body with the upper insulator 60a, or the lower insulator 60b projected from three of more than three places of an inside circumferential surface of the core in a radial direction, the fastening portion 600 is formed such that an inequality of a≥b can be defined, where "a" denotes a length of each of the "T"-shaped members 151 projecting from an outside surface of the helical core HC, and "b" denotes a distance from an inside surface of the helical core to a center of a fastening hole in the fastening portion 600.

In the meantime, referring to FIG. 5, an unexplained reference numeral 8 denotes a hole sensor assembly for controlling the motor, and 9 denotes a tap housing assembly for tapping power to supply the power to a stator side.

The work of the present invention will be described.

Different form the sectional core SC, the application of so called helical core HC, formed by stacking a steel plate having the Ts 151 and the base 150 while winding the steel plate in a helix, to the present invention permits omitting steps of aligning, and welding the core segments, to simplify a fabrication process.

Moreover, different from the sectional core, since the helical core HC has no projection, the helical core HC permits to reduce waste of material.

That is, a method for fabricating a stator of the present invention, not only simplifies a fabrication process, but also reduces waste of material.

The raised portion 621 projected from a side of each of the bosses 620 of the upper, and lower insulators 60a, and 60b facing an opposite insulator toward the opposite insulator enables assembly of the upper, and lower insulators 60a, and 60b in a state the raised portion 621 on a boss 620 side of the upper insulator 60a and the raised portion 621 of a boss 620 side of the lower insulator 60b abut to each other, to improve an assembly state.

That is, if there are no raised portions 621, the tips 610a and 610b are brought into contact at first in assembly of the upper, and lower insulators 60a and 60b, to assemble the upper and lower insulators 60a and 60b in a state the bosses 620 of the upper insulator 60a and the boss 620 of the lower insulator 60b are spaced from each other, due to a difference of heights between the tips 610a and 610b opposite to each other at an outer periphery of the upper, and lower insulators 60a and 60b, and opposite surfaces of the bosses 620 at an inner periphery of the upper, and lower insulators 60a, and 60b.

According to this, since the upper, and lower insulators 60a and 60b are assembled in a state a space between the bosses 620 of the upper, and lower insulators 60a and 60b are not in contact, if an impact, such as vibration or the like, is applied to the upper and lower insulators 60a and 60b assembled to each other, it is liable that there can be deformation, such as bending or twisting on upper, and lower insulator 60a and 60b sides having the bosses 620 formed thereon.

Therefore, the raised portions 621 are formed on the bosses 620, to bring the opposite raised portion into close contact with each other at the time of assembly of the upper, and lower insulators 60a, and 60b, so that an assembly state of facing sides of the upper, and lower insulators 60a and 60b is improved, to prevent deformation of the upper, and lower insulators 60a and 60b caused by the height difference.

Along with this, even if no projections are formed at the core itself for sustaining the fastening force at the time of fastening the stator 6 to the tub side by way of improvement of structures of the upper, and the lower insulator 60a, and 60b, the stator 6 still has a rigidity enough to sustain the bolt fastening force.

That is, by providing structures that work the same with the projections of the sectional core SC to the fasting portions 600 of the upper, and lower insulators 60a, and 60b, a stator 6 can be provided, to which the helical core HC is applicable.

Moreover, spaces 640 between the ribs 650, 660, 670, and 680 at a back side of the fastening portion 600 dampen and attenuate vibration occurred during driving the motor, to improve mechanical reliability of the stator 6, and contributes to save material of the insulators.

In the meantime, the supporting ribs 650 of the upper insulator 60a and the lower insulator 60b formed on an inner side of a radial direction of a surface of each of the upper insulator 60a and the lower insulator 60b in contact with an upper or lower surface of the helical core HC along a circumferential direction thereof support an inside surface of the core.

The reinforcing rib 660 connected between the boss 620 of the fastening hole 620a and the supporting rib 650 at each of the fastening portion 600 of the upper insulator 60a and the lower insulator 60b spreads the fastening force concentrated on the boss 620, and reinforces a strength of the fastening portion 600.

According to this, the stator 6 can effectively prevent a fastening portion of the stator 6 suffering from breakage caused by vibration at the time of spinning, and shaking and deformation of the rotor 5 even at a large capacity drum type washing machine having a weight over 1.5 kg only of the stator, and a spinning speed ranging 600 ∼ 2,000RPM.

As a positioning projection 630 in the vicinity of the fastening hole 620a of the fastening portion 600 fits in a positioning hole (not shown) in the tub 2, fastening of the stator 6 is easy.

Thus, the positioning projection enables an easy assembly of the stator 6 with the tub 2, and a serviceman to make an easy repair at the time of after service.

Of course, the positioning projection 630 may be formed on the tub 2, and the positioning hole may be formed in the fastening portion 600.

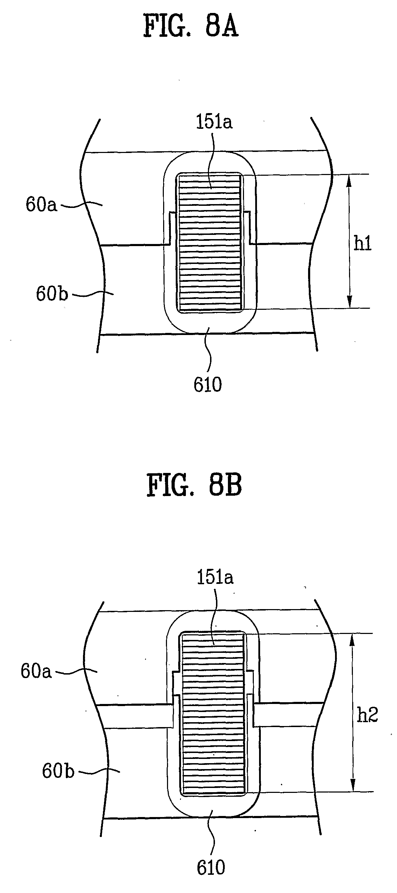

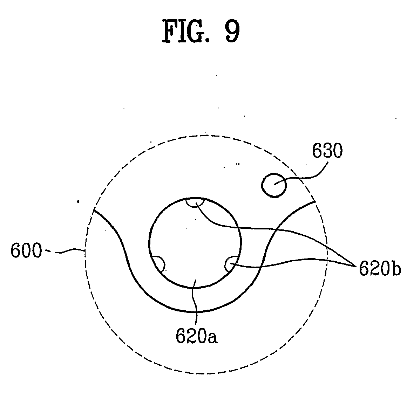

In the meantime, FIGS. 8 and 9 are reference drawings, illustrating a versatility of application of the insulators, wherein it can be noted that the upper, and lower insulators 60a and 60b are applicable even if a total height of the helical core varies within a certain range.

That is, FIG. 8 illustrates a case when a total height h1 of the core is a height which permits tips 610a and 610b of the upper, and lower insulators 60a and 60b fit exactly, and FIG. 9 illustrates a case when a total height of the core is a height greater than a case of FIG. 8 such that the tips 610a and 610b (see dashed portions in FIGS. 5 and 6) of the upper, and lower insulators 60a and 60b unable to fit exactly, but spaced a certain distance.

Even if the total height h2 of the core is greater than a height that permits the tips 610a and 610b of the upper, and lower insulators 60a and 60b fit exactly, such that there is a space between the tips 610a and the 610b, because the insulation against the core Ts is still achievable, the upper, and lower insulators 60a and 60b are applicable to the case of FIG. 9, too.

Thus, since the separate type upper, and lower insulators of the embodiment are applicable to the core regardless of the total height of the core within a certain range of the total height, the separate type upper, and lower insulators of the embodiment can improve workability on an assembly line.

FIG. 10 illustrates a plan view of a variation of the fastening portion in FIG. 5, which is the same with the foregoing embodiment except that the fastening hole in the boss 620 has fastening projections 620b on an inside circumferential surface of the fastening hole, for preventing the cylindrical sleeve 800 from falling off the fastening hole.

That is, for preventing the cylindrical sleeve 800 from falling off the fastening hole 620a, the fastening projections 620b are formed on the inside circumferential surface of the fastening hole 620a.

It is preferable that a plurality of the fastening projections 620b are formed along a circumferential direction of an inside circumferential surface of the fastening hole 620a at regular intervals.

The fastening projection has a length the same with, or shorter than a depth of the fastening hole 620a of the boss 620.

Though it is preferable that the fastening projection 620b has a semi-circular section substantially, the shape of the fastening projection 620b is not limited to this, but an elliptical shape or other shape is also viable.

The work of the embodiment will be described.

Basically, the embodiment has the same work with the foregoing embodiment, and characterized work of the embodiment is as follows.

That is, the fastening projections 620b in the fastening hole 620a of the upper and lower insulators 60a and 60b apply a pressure to an outside circumferential surface of the cylindrical sleeve 800 placed in the fastening hole 620a, thereby preventing the cylindrical sleeve 800 from falling off the fastening hole 620a.

According to this, mounting of the cylindrical sleeve 800 can be rigid.

### Industrial Applicability

The present invention permits reducing materials and weight required for fabrication of a stator of a BLDC motor for a drum type washing machine, and secure mounting of the stator to a fixing side like a tub, to improve productivity and saving production cost.

The easy mounting of the stator to the tub in an assembly line permits easy maintenance in service.

Moreover, the improved assembly state of the upper and lower insulators enhances rigidity of the stator, with reduction of noise and vibration, which improves mechanical reliability and extends a lifetime.

Along with this, the improved mountability of the cylindrical sleeve, which is placed in the fastening holes of the upper, and lower insulators, and serves as a bushing, enhances rigidity of the stator, with reduction of noise and vibration, which improves mechanical reliability of the product, and extends a lifetime of the product, thereby having significant industrial applicability.

## Claims

1. A stator of an outer rotor type motor for a drum type washing machine comprising:
an annular core (HC) of a multi-layered structure formed by stacking a steel plate having a belt shaped base (150) and "T"-shaped members (151) projecting from the base (150) while winding the steel plate in a helix starting from a bottom layer to a top layer;
an upper insulator (60a) of an electric insulating material covering an upper side of the helical core (HC) in a shape complementary to a shape of the helical core(HC); and
a lower insulator (60b) of an electric insulating material covering a lower side of the helical core (HC) at the time of assembly with the upper insulator (60a) in a shape complementary to a shape of the helical core (HC),
wherein each of the upper insulator (60a) and the lower insulator (60b) includes at least three or more fastening portions (600) formed as one body therewith the stator (6) being **characterized in that** each fastening portion (600) is projected from an inner side of the helical core (HC) toward a center of the stator (6) for fastening the stator (6) to a fixing side of a tub, each fastening portion (600) has a boss (620) which constructs a fastening hole (620a) for
fastening the stator (6) to a fixing side of the tub with a fastening member, and
each of the bosses (620) of the upper insulator (60a), and lower insulator (60b) includes a raised
portion (621) projected from a side facing the other insulator toward an opposite insulator, for putting the upper insulator (60a), and lower insulator (60b) into close contact in assembly to improve a
state of assembly of the upper insulator (60a), and lower insulator (60b).

2. The stator as claimed in claim 1, wherein the upper insulator (60a) and the lower insulator (60b) each has a supporting rib (650) on an inner side of a radial direction of a surface of each of the upper insulator (60a) and the lower insulator (60b) in contact with an upper or lower surface of the helical core (HC) along a circumferential direction thereof for supporting an inside surface of the helical core (HC).

3. The stator as claimed in claim 2, wherein the fastening portion (600) of each of the upper insulator (60a) and the lower insulator (60b) includes at least one reinforcing rib (660) connected between the boss (620) which constructs the fastening hole (620a) and the supporting ribs (650) for spreading fastening force concentrated on the boss (620) and reinforcing strength of the fastening portion (600).

4. The stator as claimed in claim 1, wherein the upper insulator (60a) and the lower insulator (60b) each further includes tips (610a, 610b) on opposite sidewalls of each of the "T"-shaped members (610) thereof having shapes in complementary to each other for fitting in at the time of assembly to form a flush surface.

5. The stator as claimed in claim 4, wherein each of the tips (610a, 610b) on each of the "T"-shaped members (610) has a " 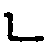 " shape if the other side has a " 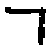 " shape.

6. The stator as claimed in claim 1, wherein the upper insulator (60a) and the lower insulator (60b) each further includes tips (610a, 610b) having shapes in complementary to each other to form a flush surface at the opposite end surfaces substantially perpendicular to the opposite sidewall surfaces of the "T"-shaped member (610).

7. The stator as claimed in claim 1, wherein the upper insulator (60a) and the lower insulator (60b) each further includes a seating surface (611a) projected from an outer side of each of opposite end walls of the "T"-shaped members (610) for seating a core shoe (151a) of the helical core (HC).

8. The stator as claimed in claim 1, wherein at least one fastening portion (600) of the
upper insulator (60a) includes a positioning projection (630) in the vicinity of the fastening hole (620a), having a shape in complementary to a positioning hole or a slot in the fixing side of the tub.

9. The stator as claimed in claim 1, further comprising a cylindrical sleeve (800) placed in the fastening hole (620a).

10. The stator as claimed in claim 9, wherein the cylindrical sleeve (800) is a spring pin having an elasticity owing to an incised portion along a length direction of an outside circumferential surface.

11. The stator as claimed in claim 9, wherein the cylindrical sleeve (800) is a hollow pin without an incised portion to press fit in the fastening hole (620a).

12. The stator as claimed in claim 1, wherein the base (150) of the helical core (HC) has notches for reducing stress at the time of winding the helical core (HC).

13. The stator as claimed in claim 1, wherein the helical core (HC) is held together with a rivet (153) riveted through a pass through hole in the base (150).

14. The stator as claimed in claim 1, wherein the helical core (HC) includes a winding starting portion and a winding end portion welded to predetermined portions of the base (150) in contact therewith, respectively.

15. The stator as claimed in claim 1, wherein each fastening portion (600) is formed
such that an inequality of a≥b can be defined, where "a" denotes a length of each of the "T"-shaped members (151) projecting from an outside surface of the helical core (HC), and "b" denotes a distance from an inside surface of the helical core (HC) to a center of a fastening hole (620a) in the fastening portion (600).

## Patentansprüche

1. Stator für einen Außenrotormotor einer Trommelwaschmaschine, wobei der Stator aufweist:
einen ringförmigen Kern (HC) einer mehrschichtigen Struktur, die aus einem Stahlblechstapel besteht, der durch Wickeln eines Stahlblechs, das eine bandförmige Basis (150) mit aus der Basis (150) vorspringenden "T"-förmigen Elementen (151) aufweist, in eine Helix, startend von einer unteren Schicht zu einer oberen Schicht, gebildet ist;
einen aus einem elektrisch isolierenden Material hergestellten oberen Isolator (60a), der eine obere Seite des helikalen Kerns (HC) bedeckt und eine Form hat, die komplementär zur Form des helikalen Kerns (HC) ist; und
einen aus einem elektrisch isolierenden Material hergestellten unteren Isolator (60b), der eine untere Seite des helikalen Kerns (HC) beim Zusammenfügen mit dem oberen Isolator (60a) bedeckt und eine Form hat, die komplementär zur Form des helikalen Kerns (HC) ist,
wobei der obere Isolator (60a) und der untere Isolator (60b) jeweils mindestens drei Befestigungsabschnitte (600) aufweisen, die als ein Körper mit dem jeweiligen Isolator gebildet sind,
wobei der Stator (6) **dadurch gekennzeichnet ist, dass**
jeder Befestigungsabschnitt (600) von einer Innenseite des helikalen Kerns (HC) zu einem Zentrum des Stators (6) vorspringt, um den Stator (6) an einer Verbindungsseite eines Laugenbehälters zu befestigen,
wobei jeder Befestigungsabschnitt (600) eine Auskragung (620) mit einem darin gebildeten Befestigungsloch (620a) aufweist, um mit Hilfe eines Befestigungselements den Stator (6) an einer Verbindungsseite des Bottichs zu befestigen, und
jede Auskragung (620) des oberen Isolators (60a) und des unteren Isolators (60b) einen erhöhten Abschnitt (621) aufweist, der aus einer dem jeweils anderen Isolator zugewandten Seite zu dem jeweils anderen Isolator hin vorspringt, um beim Zusammenfügen den oberen Isolator (60a) und den unteren Isolator (60b) in engem Kontakt anzuordnen, um einen zusammengefügten Zustand des oberen Isolators (60a) und des unteren Isolators (60b) zu verbessern.

2. Stator nach Anspruch 1, wobei der obere Isolator (60a) und der untere Isolator (60b) jeweils eine Stützrippe (650) an einer Innenseite in radialer Richtung einer Oberfläche des oberen Isolators (60a) und des unteren Isolators (60b) in Kontakt mit einer oberen oder unteren Oberfläche des helikalen Kerns (HC) entlang dessen Umfangsrichtung aufweisen, um eine Innenfläche des helikalen Kerns (HC) zu stützen.

3. Stator nach Anspruch 2, wobei jeder Befestigungsabschnitt (600) des oberen Isolators (60a) und des unteren Isolators (60b) mindestens eine Verstärkungsrippe (660) aufweist, die sich zwischen der Auskragung (620), die das Befestigungsloch (620a) bildet, und der Stützrippe (650) erstreckt, um die auf die Auskragung (620) wirkende Befestigungskraft zu verteilen und die Festigkeit des Befestigungsabschnitts (600) zu verstärken.

4. Stator nach Anspruch 1, wobei sowohl der obere Isolator (60a) wie auch der untere Isolator (60b) an gegenüberliegenden Seitenwänden jedes seiner "T"-förmigen Elemente (610) Spitzen (610a, 610b) aufweist, die zueinander komplementäre Formen haben, um beim Zusammenfügen ineinander zu greifen, um eine bündige Oberfläche zu bilden.

5. Stator nach Anspruch 4, wobei jede der Spitzen (610a, 610b) an jedem der "T"-förmigen Elemente (610) eine " 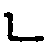 "-Form hat, wenn die andere Seite eine " 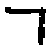 "-Form hat.

6. Stator nach Anspruch 1, wobei der obere Isolator (60a) und der untere Isolator (60b) außerdem Spitzen (610a, 610b) aufweisen, die zueinander komplementäre Formen haben, um an den entgegengesetzten Endflächen des "T"-förmigen Elements (610), die im Wesentlichen senkrecht zu den entgegengesetzten Seitenwandflächen sind, eine bündige Oberfläche zu bilden.

7. Stator nach Anspruch 1, wobei der obere Isolator (60a) und der untere Isolator (60b) außerdem jeweils eine Lagerfläche (611a) aufweisen, die von einer Außenseite einer Endwand jedes "T"-förmigen Elements (610) vorspringt, um einen Kernschuh (151a) des helikalen Kerns (HC) zu lagern.

8. Stator nach Anspruch 1, wobei mindestens ein Befestigungsabschnitt (600) des oberen Isolators (60a) einen in der Nähe des Befestigungslochs (620a) angeordneten Positionierungsvorsprung (630) aufweist, dessen Form komplementär zu derjenigen eines an der Verbindungsseite des Bottichs angeordneten Positionierungslochs oder Positionierungsschlitzes ist.

9. Stator nach Anspruch 1, außerdem mit einer in dem Befestigungsloch (620a) angeordneten zylindrischen Manschette (800).

10. Stator nach Anspruch 9, wobei die zylindrische Manschette (800) ein Federstift ist, der dank eines in einer äußeren Umfangsfläche entlang einer Längsrichtung angeordneten Einschnitts eine Elastizität aufweist.

11. Stator nach Anspruch 9, wobei die zylindrische Manschette (800) ein hohler Stift ohne Einschnitt ist, um in das Befestigungsloch (620a) hineingepresst zu werden.

12. Stator nach Anspruch 1, wobei die Basis (150) des helikalen Kerns (HC) Einkerbungen aufweist, um Spannungen beim Wickeln des helikalen Kerns (HC) zu verringern.

13. Stator nach Anspruch 1, wobei der helikale Kern (HC) mit Hilfe eines Niets (153), der durch ein hindurchgehendes Loch in der Basis (150) genietet ist, zusammengehalten wird.

14. Stator nach Anspruch 1, wobei der helikale Kern (HC) einen Wickelstartabschnitt und einen Wickelendabschnitt aufweist, die jeweils an vorgegebene Abschnitte der Basis (150) in Kontakt mit ihnen angeschweißt sind.

15. Stator nach Anspruch 1, wobei jeder Befestigungsabschnitt (600) derart gebildet ist, dass eine Ungleichung a≥b erfüllt ist, wobei "a" eine Länge eines von einer Außenfläche des helikalen Kerns (HC) vorspringenden "T"-förmigen Elements (151) bezeichnet, und "b" einen Abstand zwischen einer inneren Oberfläche des helikalen Kerns (HC) und einer Mitte eines Befestigungslochs (620a) in dem Befestigungsabschnitt (600) bezeichnet.

## Revendications

1. Stator d'un moteur de type à rotor externe pour une machine à laver de type à tambour, comprenant :
un noyau annulaire (HC) d'une structure multicouche formée en empilant une plaque d'acier ayant une base en forme de courroie (150) et des éléments en forme de « T » (151) faisant saillie de la base (150) tout en enroulant la plaque d'acier en une hélice, en commençant par une couche inférieure jusqu'à une couche supérieure ;
un isolateur supérieur (60a) d'un matériau d'isolation électrique recouvrant un côté supérieur du noyau hélicoïdal (HC) dans une forme complémentaire à une forme du noyau hélicoïdal (HC) ; et
un isolateur inférieur (60b) d'un matériau d'isolation électrique recouvrant un côté inférieur du noyau hélicoïdal (HC) au moment de l'assemblage avec l'isolateur supérieur (60a) dans une forme complémentaire à une forme du noyau hélicoïdal (HC),
dans lequel chacun parmi l'isolateur supérieur (60a) et l'isolateur inférieur (60b) comprend au moins trois parties de fixation ou plus (600) formées d'un seul tenant avec ce dernier,
le stator (6) étant **caractérisé en ce que** :
chaque partie de fixation (600) fait saillie d'un côté interne du noyau hélicoïdal (HC) vers un centre du stator (6) pour fixer le stator (6) sur un côté de fixation d'une cuve,
chaque partie de fixation (600) a un bossage (620) qui réalise un trou de fixation (620a) pour fixer le stator (6) sur un côté de fixation de la cuve avec un élément de fixation, et
chacun des bossages (620) de l'isolateur supérieur (60a) et de l'isolateur inférieur (60b) comprend une partie relevée (621) en saillie à partir d'un côté faisant face à l'autre isolateur vers un isolateur opposé, pour placer l'isolateur supérieur (60a) et l'isolateur inférieur (60b) en contact immédiat en assemblage afin d'améliorer un état d'assemblage de l'isolateur supérieur (60a) et de l'isolateur inférieur (60b).

2. Stator selon la revendication 1, dans lequel l'isolateur supérieur (60a) et l'isolateur inférieur (60b) ont chacun une nervure de support (650) sur un côté interne d'une direction radiale d'une surface de chacun parmi l'isolateur supérieur (60a) et l'isolateur inférieur (60b) en contact avec une surface supérieure ou inférieure du noyau hélicoïdal (HC) le long de sa direction circonférentielle pour supporter une surface intérieure du noyau hélicoïdal (HC).

3. Stator selon la revendication 2, dans lequel la partie de fixation (600) de chacun parmi l'isolateur supérieur (60a) et l'isolateur inférieur (60b) comprend au moins une nervure de renforcement (660) raccordée entre le bossage (620) qui réalise le trou de fixation (620a) et les nervures de support (650) pour répartir la force de fixation concentrée sur le bossage (620) et renforcer la résistance de la partie de fixation (600).

4. Stator selon la revendication 1, dans lequel l'isolateur supérieur (60a) et l'isolateur inférieur (60b) comprennent en outre chacun des pointes (610a, 610b) sur des parois latérales opposées de chacun de leurs éléments en forme de « T » (610) ayant des formes complémentaires entre elles pour s'adapter au moment de l'assemblage afin de former une surface de niveau.

5. Stator selon la revendication 4, dans lequel chacune des pointes (610a, 610b) sur chacun des éléments en forme de « T » (610) a une forme de « L » si l'autre côté a une forme de « ¬ ».

6. Stator selon la revendication 1, dans lequel l'isolateur supérieur (60a) et l'isolateur inférieur (60b) comprennent en outre chacun des pointes (610a, 610b) ayant des formes complémentaires entre elles afin de former une surface de niveau au niveau des surfaces d'extrémité opposées sensiblement perpendiculaires aux surfaces de paroi latérale opposées de l'élément en forme de « T » (610).

7. Stator selon la revendication 1, dans lequel l'isolateur supérieur (60a) et l'isolateur inférieur (60b) comprennent en outre chacun une surface de siège (611a) faisant saillie d'un côté externe de chacune des parois d'extrémité opposées des éléments en forme de « T » (610) pour installer un patin de noyau (151a) du noyau hélicoïdal (HC).

8. Stator selon la revendication 1, dans lequel au moins une partie de fixation (600) de l'isolateur supérieur (60a) comprend une saillie de positionnement (630) à proximité du trou de fixation (620a), ayant une forme complémentaire d'un trou de positionnement ou d'une fente dans le côté de fixation de la cuve.

9. Stator selon la revendication 1, comprenant en outre un manchon cylindrique (800) placé dans le trou de fixation (620a).

10. Stator selon la revendication 9, dans lequel le manchon cylindrique (800) est une goupille élastique ayant une élasticité en raison d'une partie incisée le long d'une direction de longueur d'une surface circonférentielle externe.

11. Stator selon la revendication 9, dans lequel le manchon cylindrique (800) est une goupille creuse sans partie incisée pour être ajustée par pression dans le trou de fixation (620a).

12. Stator selon la revendication 1, dans lequel la base (150) du noyau hélicoïdal (HC) a des encoches pour réduire la tension au moment de l'enroulement du noyau hélicoïdal (HC).

13. Stator selon la revendication 1, dans lequel le noyau hélicoïdal (HC) est maintenu conjointement avec un rivet (153) riveté à travers un trou traversant dans la base (150).

14. Stator selon la revendication 1, dans lequel le noyau hélicoïdal (HC) comprend une partie de début d'enroulement et une partie de fin d'enroulement, soudées sur les parties prédéterminées de la base (150) en contact avec ces dernières, respectivement.

15. Stator selon la revendication 1, dans lequel chaque partie de fixation (600) est formée de sorte qu'une inégalité de a ≥ b peut être définie, dans laquelle « a » désigne une longueur de chacun des éléments en forme de « T » (151) faisant saillie d'une surface extérieure du noyau hélicoïdal (HC) et « b » désigne une distance allant d'une surface intérieure du noyau hélicoïdal (HC) jusqu'à un centre d'un trou de fixation (620a) dans la partie de fixation (600).
